# FASCICULE DE BREVET EUROPEEN

(11) **EP 2 009 298 B1**
(45) Date de publication et mention de la délivrance du brevet: **13.01.2010**
(21) Numéro de dépôt: 08158639.8
(22) Date de dépôt: 19.06.2008
(51) Int. Cl.: F16B 37/04

(54) **Support pour le vissage notamment d'un élément d'assise de véhicule automobile et procède d'assemblage d'un tel support**
Schraubhalterung insbesondere für Sitzelement eines Kraftfahrzeugs und Montageverfahren einer solchen Halterung
Screwing support, in particular for an automobile seat element, and method for assembling such a support

(30) Priorité: 27.06.2007 FR 0756060
(43) Date de publication de la demande: 31.12.2008
(73) Titulaire: PEUGEOT CITROËN AUTOMOBILES S.A., 78140 Vélizy Villacoublay (FR)
(72) Inventeur: Paris, Renaud, 77000, Melun (FR)
(74) Mandataire: Fernandez, Francis Lionel

(56) Documents cités:
- FR-A- 1 019 367
- US-A- 2 780 264
- US-A1- 2005 134 069

## Description

La présente invention concerne un support de vissage pour permettre le montage d'un élément dans un véhicule automobile, et notamment d'un élément d'assise tel qu'un siège ou une banquette (US 2005/0134069).

La présente invention concerne plus particulièrement un support de vissage qui est destiné à être soudé sur la structure de soubassement formant plancher du véhicule et qui définit une cage dans laquelle un écrou de fixation est monté, cet écrou pouvant collaborer avec une vis pour le montage de l'élément sur le plancher.

Il est connu des agencements de ce type de support de vissage dans lequel un écrou est logé dans une cage. Cet écrou présente des degrés de liberté permettant l'ajustement entre la vis rendue par la suite solidaire de l'élément à monter et l'écrou. Afin de ne pas autoriser une liberté de rotation qui empêcherait l'immobilisation de l'élément à monter sur le support, l'écrou présente une forme sensiblement rectangulaire de sorte que la rotation est empêchée par le contact entre l'écrou et les parois de la cage. Cette cage et l'écrou associé sont montés sur le véhicule, fixés au plancher et recouverts par un boîtier sur lequel vient en appui l'élément à monter.

Selon l'art antérieur connu relatif à un support de vissage pour siège automobile, le processus de fabrication d'un tel support de vissage consiste d'abord à assembler et souder la cage, puis à souder cette dernière sur la structure du véhicule, à loger l'écrou dans la cage et enfin à assembler un boîtier sur la structure du véhicule, au dessus de la cage, sur lequel viendra en appui le siège lors du montage de ce dernier dans le véhicule.

L'objectif de l'invention est donc de proposer un support de vissage du type décrit ci dessus qui soit plus simple et donc moins cher à fabriquer et à monter sur le plancher d'un véhicule automobile.

Pour répondre à cet objectif, l'invention propose un support de vissage d'un élément de véhicule automobile, tel qu'un siège, apte à permettre le montage de cet élément sur un moyen structurel du véhicule, le support formant une cage dans laquelle est monté un écrou pouvant coopérer avec une vis pour le montage de l'élément.

Selon l'invention, le support de vissage est caractérisé en ce qu'il comprend un élément de support inférieur destiné à venir au contact du moyen structurel et un élément de support supérieur destiné à venir au contact de l'élément à monter, les supports respectivement supérieur et inférieur comportant respectivement des surfaces d'appui supérieures et inférieures en regard deux à deux, chaque paire de surfaces formée d'une surface d'appui inférieur et supérieur en regard définissant une patte de fixation du support sur le moyen structurel du véhicule.

Selon une autre caractéristique du support de vissage selon l'invention, les éléments de support inférieur et supérieur sont obtenus chacun par pliage et découpage d'une plaque métallique.

Selon une autre caractéristique du support de vissage selon l'invention, l'écrou est immobilisé en rotation dans un logement approprié de l'élément de support inférieur, le logement étant défini par une surface de fond et des surfaces latérales en saillie.

Selon une autre caractéristique du support de vissage selon l'invention, l'une des surfaces latérales en saillie de l'élément de support inférieur définissant le logement de l'écrou est de dimension réduite pour permettre l'insertion de l'écrou dans ce logement.

Selon une autre caractéristique du support de vissage selon l'invention, la surface de fond du logement de l'écrou se trouve sensiblement au-dessus des pattes de fixation.

Selon une autre caractéristique du support de vissage selon l'invention, les pattes de fixation comprennent au moins une patte de fixation s'étendant parallèlement à la surface de fond du logement de l'écrou.

Selon une autre caractéristique du support de vissage selon l'invention, les pattes de fixation comprennent au moins une patte s'étendant obliquement à la surface de fond du logement de l'écrou.

Selon une autre caractéristique du support de vissage selon l'invention, les éléments de support inférieur et supérieur comportent des orifices oblongs en regard permettant le passage de la vis ainsi que d'un outil pour permettre le positionnement de ces éléments de support sur le moyen structurel du véhicule.

Selon une autre caractéristique du support de vissage selon l'invention, l'élément de support supérieur comprend une surface d'appui pour venir directement au contact de l'élément à monter, la surface d'appui se trouvant sensiblement au-dessus des pattes de fixation et s'étendant au-dessus du moyen structurel d'une hauteur prédéterminée.

L'invention vise également à protéger un procédé d'assemblage d'un support de vissage d'un élément de véhicule automobile apte à permettre le montage de cet élément sur un moyen structurel du véhicule, le support formant une cage dans laquelle est monté un écrou pouvant coopérer avec une vis pour le montage de l'élément, le support comprenant un élément de support inférieur destiné à venir au contact dudit moyen structurel et un élément de support supérieur destiné à venir au contact de l'élément à monter, les supports respectivement supérieur et inférieur comportant respectivement des surfaces d'appui supérieures et inférieures en regard deux à deux, chaque paire de surfaces formée d'une surface d'appui inférieur et supérieur en regard définissant une patte de fixation du support sur le moyen structurel du véhicule.

Le procédé est caractérisé en ce qu'il consiste lors des opérations de ferrage par lesquelles la caisse du véhicule automobile est assemblée et soudée, à positionner les deux éléments de support sur le moyen structurel du véhicule puis à souder chaque paire de surfaces d'appui l'une sur l'autre et sur le moyen structurel du véhicule au moyen d'un unique point de soudure.

L'invention vise à protéger également un véhicule automobile comprenant un élément d'assise monté par l'intermédiaire d'au moins un support de vissage selon l'invention.

La présente invention et ses avantages seront mieux compris à l'étude de la description détaillée d'un mode de réalisation donné à titre d'exemple non limitatif et illustré par les dessins annexés, sur lesquels:
- la Figure 1 est une vue en perspective avant du support de vissage selon un mode de réalisation de l'invention;
- la Figure 2 est une vue en perspective arrière du support de vissage représenté à la figure 1, positionné sur le plancher d'un véhicule automobile;
- les Figures 3 à 5 sont des vues en perspective de dessus détaillent les différents éléments du support de vissage représenté à la figure 1, à savoir : l'écrou, l'élément de support inférieur et l'élément de support supérieur.

Dans la description qui va suivre, on adoptera à titre non limitatif une orientation longitudinale, verticale et transversale selon l'orientation traditionnellement utilisée dans l'industrie automobile.

La description qui va suivre divulgue un mode de réalisation particulier de l'invention dans lequel le support de vissage selon l'invention est relatif au montage d'un siège. Il sera compris que d'autres éléments, dont le montage est opéré par vissage peuvent bénéficier de ce support de vissage selon l'invention.

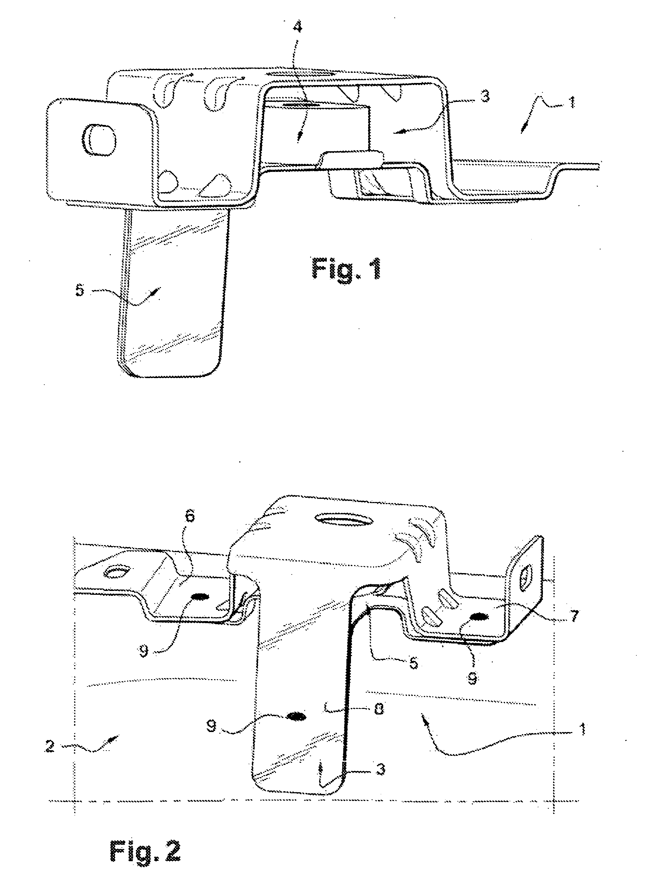

Sur les Figures 1 et 2 on a représenté un support de vissage référencé 1 pour un siège non figuré de véhicule automobile, support qui vient se souder par trois pattes de fixation 6, 7 et 8 sur une traverse 2 intégrée au soubassement d'un véhicule automobile. Chaque patte de fixation est soudée sur la traverse 2 par un point de soudure 9. Un seul support a été présenté, mais il va de soi que plusieurs supports peuvent être nécessaires pour la fixation du siège.

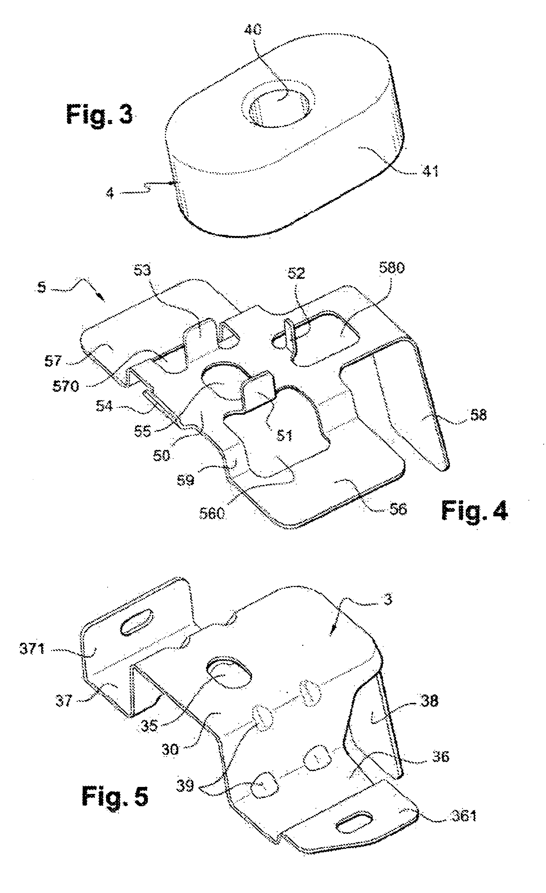

Le support de vissage 1 se compose de 3 pièces distinctes : une pièce formant écrou 4, un élément de support inférieur 5 et un élément de support supérieur 3. Chacune de ces pièces a été détaillée conformément aux Figures 3 à 5.

La pièce formant écrou 4, encore appelée romaine, présente une forme quelque peu oblongue présentant des parois latérales 41 offrant au moins deux faces planes en vis-à-vis et étant percée d'un alésage fileté 40 débouchant sur ses faces supérieure et inférieure orientées sensiblement perpendiculairement aux dites parois latérales 41. Bien évidemment, cette pièce n'est pas limitative de l'invention et n'importe quel écrou est à même d'être utilisé.

L'élément de support inférieur 5 est obtenu par découpe et pliage d'une plaque métallique. Il comporte un logement pour recevoir l'écrou 4. Ce logement est défini par une surface de fond plane 50 percée en son centre d'un orifice 55 formant boutonnière et des surfaces latérales en saillie 52 et 54, 51 et 53 s'étendant à la périphérie de la surface de fond 50 sensiblement perpendiculairement à cette dernière.

Ces surfaces latérales 51 à 54 limitent les déplacements respectivement longitudinaux et transversaux de l'écrou 4 et plus particulièrement la rotation de ce dernier. Les dimensions de l'écrou 4 et de l'espace creux aménagé dans l'élément de support inférieur 5 par la surface d'appui d'une part et les surfaces en saillie 51 à 54 sont telles que l'écrou 4 ne peut tourner sur lui même, les parois latérales 41 de l'écrou 4 entrant dans ce cas en contact avec les surfaces en regard 51 et 53 du support inférieur 5.

La surface latérale 54 de moindre hauteur que les autres est adaptée pour permettre la mise en place de l'écrou dans son logement ainsi délimité par la surface de fond 50 et les surfaces latérales 51 à 54.

Cet élément de support intérieur comprend par ailleurs trois surface d'appui 56, 57 et 58 s'étendant sur trois côtés de ladite surface de fond 50 à laquelle elles sont par ailleurs rattachées. La surface d'appui 58 s'étendant à proximité de la surface latérale 52 est obtenue par un pliage formant un certain angle par rapport à la surface de fond et forme un bord tombé faisant saillie obliquement à la surface de fond 50 et s'étendant à l'opposée de la surface latérale 52.

Les surfaces d'appui 56 et 57 sont obtenues après un premier pliage définissant des bords tombés 59 puis un second pliage permettant aux surfaces d'appui 56 et 57 de s'étendre sensiblement parallèlement à la surface de fond 50, en contrebas de cette dernière d'une hauteur prédéterminée. Des découpes 560, 570 et 580 sont formées dans ces pattes 56, 57 et 58 non seulement pour permettre la conformation des surfaces 51 à 53 mais également pour alléger ladite pièce et également permettre le passage du bain de cataphorèse et de peinture.

La face inférieure de la surface d'appui 58 est destinée à venir au contact de la paroi latérale de la traverse 2 tandis que les faces inférieures des surfaces d'appui 56 et 57 sont destinées à venir au contact de la surface supérieure de la traverse 2.

L'élément de support supérieur 3 est également obtenu par découpe et pliage d'une plaque métallique de façon similaire à la réalisation de l'élément de support inférieur 5. Bien évidemment, les caractéristiques mécaniques des deux éléments ne sont pas nécessairement les mêmes et on donc prévoir que la plaque métallique formant l'élément de support supérieur 3 présente des caractéristiques dimensionnelles (épaisseur) et/ou mécaniques (composition de l'acier) supérieures à celle de plaque formant l'élément de support inférieur 5.

Cet élément de support supérieur 3 présente une zone principale 30 dont la face inférieure est destinée à venir recouvrir le logement pour l'écrou 4 ménagé dans l'élément de support inférieur 5 et ainsi formé avec ce dernier une cage à l'intérieur de laquelle est disposé l'écrou 4. Cette zone principale 30 est par ailleurs adaptée à recevoir sur sa face supérieure le siège où une glissière solidaire de ce dernier.

Un trou 35 de taille adaptée et formant boutonnière est prévu dans la zone principale 30 pour laisser le passage à une vis de fixation et permettre la solidarisation du siège ou de sa glissière. Le mouvement de translation autorisé de l'écrou mobile 4 par les dimensions adaptées du logement pour l'écrou 4 ménagé dans l'élément de support inférieur 5 permet un ajustement de la position de cet écrou 4 de sorte qu'il puisse se retrouver sous le trou 35 et à la verticale de la vis de fixation. Cet ajustement permet de rattraper les dispersions de montage du siège et de pouvoir aligner la vis, le passage 35 de vis aménagé dans le support 1 et l'écrou mobile 4 pour permettre la fixation du siège sur la traverse 2 du véhicule.

La zone principale 30 de l'élément de support supérieur 3 présente des surfaces d'appui respectivement 36, 37 et 38, complémentaires aux surfaces d'appui 56, 57 et 58 de l'élément de support inférieur 5 qu'elles sont destinées à recouvrir de façon à former les pattes de fixation 6, 7 et 8. Ces surfaces d'appui 36, 37 et 38 sont obtenues par des pliages sensiblement similaires à ceux mis en oeuvre pour obtenir les surfaces complémentaires 56, 57 et 58.

Des rainures 39 sont réalisées dans l'élément de support supérieur 3 dans différentes arêtes de pliage afin de consolider la pièce.

Conformément à la description qui précède du support selon l'invention, le procédé de montage d'un tel support sur la structure du véhicule est le suivant. Lors des opérations de ferrage par lesquelles la caisse du véhicule est assemblée et soudée et notamment lors de l'assemblage et du soudage du plancher les éléments de support inférieur 5 et supérieur 3 sont pré-positionnées sur la traverse 2 notamment au moyen d'un doigt d'indexation traversant les orifices 35 et 55.

Les deux éléments de supports étant correctement positionnés l'un sur l'autre conformément à la Figure 2, chaque patte de fixation respectivement 6, 7 et 8, formée respectivement par l'assemblage des paires de surfaces d'appui en regard 36-56, 37-57 et 38-58, est alors soudée sur la traverse 2 par un point de soudure 9. Ce point de soudure 9 opérant à la fois la soudure des surfaces d'appui en regard entre elles et avec la traverse 2.

L'écrou 4 est ensuite disposé dans son évidement conformément à la Figure 1. Le support 1 est alors réalisé et peut être traité en cataphorèse puis en peinture, avec le reste du soubassement et plus généralement de la caisse du véhicule automobile.

L'invention n'est nullement limitée au mode de réalisation décrit et illustré qui n'a été donné qu'à titre d'exemple.

## Revendications

1. Support de vissage (1) d'un élément de véhicule automobile, tel qu'un siège, apte à permettre le montage de cet élément sur un moyen structurel (2) du véhicule, ledit support (1) formant une cage dans laquelle est monté un écrou (4) pouvant coopérer avec une vis pour le montage de l'élément, il comprend un élément de support inférieur (5) destiné à venir au contact dudit moyen structurel (2) et un élément de support supérieur (3) destiné à venir au contact dudit élément à monter, lesdits supports respectivement supérieur (3) et inférieur (5) comportant respectivement des surfaces d'appui supérieures et inférieures en regard deux à deux (36,56 ; 37,57 ; 38,58), chaque paire de surfaces formée d'une surface d'appui inférieur et supérieur en regard définissant une patte de fixation (6,7,8) dudit support (1) sur ledit moyen structurel (2) du véhicule **caractérisé en ce que** l'écrou (4) étant immobilisé en rotation dans un logement approprié de l'élément de support inférieur (5), ledit logement étant défini par une surface de fond (50) et des surfaces latérales en saillie (51,52,53,54), l'une (54) desdites surfaces latérales en saillie étant de dimension réduite pour permettre l'insertion de l'écrou (4) dans ledit logement.

2. Support de vissage (1) selon la revendication 1, **caractérisé en ce que** chacun desdits éléments de support (3,5) est obtenu par pliage et découpage d'une plaque métallique.

3. Support de vissage (1) selon l'une quelconque des revendications 1 à 2, **caractérisé en ce que** ladite surface de fond (50) se trouve sensiblement au-dessus desdites pattes de fixation (6,7,8).

4. Support de vissage (1) selon l'une quelconque des revendications 1 à 3, **caractérisé en ce que** lesdites pattes de fixation comprennent au moins une patte de fixation (6,7) s'étendant parallèlement à ladite surface de fond (50).

5. Support de vissage (1) selon l'une quelconque des revendications 1 à 4, **caractérisé en ce que** lesdites pattes de fixation comprennent au moins une patte (8) s'étendant obliquement à ladite surface de fond (50).

6. Support de vissage (1) selon l'une quelconque des revendications 1 à 5, **caractérisé en ce que** lesdits éléments de support (3,5) comportent des orifices oblongs (35,55) en regard permettant le passage de la vis ainsi que d'un outil pour permettre le positionnement desdits éléments de support (3,5) sur le moyen structurel (2) du véhicule.

7. Support de vissage (1) selon l'une quelconque des revendications 1 à 6, **caractérisé en ce que** ledit élément de support supérieur (3) comprend une surface d'appui pour venir directement au contact dudit élément à monter, ladite surface d'appui se trouvant sensiblement au-dessus desdites pattes de fixation (6,7,8) et s'étendant au-dessus dudit moyen structurel d'une hauteur prédéterminée.

8. Procédé d'assemblage d'un support de vissage (1) d'un élément de véhicule automobile apte à permettre le montage de cet élément sur un moyen structurel (2) du véhicule, ledit support (1) formant une cage dans laquelle est monté un écrou (4) pouvant coopérer avec une vis pour le montage de l'élément, ledit support comprenant un élément de support inférieur (5) destiné à venir au contact dudit moyen structurel (2) et un élément de support supérieur (3) destiné à venir au contact dudit élément à monter, lesdits supports respectivement supérieur (3) et inférieur (5) comportant respectivement des surfaces d'appui supérieures et inférieures en regard deux à deux (36,56 ; 37,57 ; 38,58), chaque paire de surfaces formée d'une surface d'appui inférieur et supérieur en regard définissant une patte de fixation (6,7,8) dudit support (1) sur ledit moyen structurel (2) du véhicule, **caractérisé en ce qu'**il consiste lors des opérations de ferrage à positionner les deux éléments de support sur le moyen structurel (2) du véhicule puis à souder chaque paire de surfaces d'appui l'une sur l'autre et sur le moyen structurel du véhicule au moyen d'un unique point de soudure (9), puis lors d'une phase ultérieure à monter l'écrou dans la cage ainsi formée.

## Claims

1. Screwing support (1) for a motor vehicle element such as a seat, able to allow this element to be mounted on a structural means (2) of the vehicle, the said support (1) for in a cage in which there is mounted a nut (4) able to collaborate with a bolt in order to mount the element, it comprises a lower support element (5) intended to come into contact with the said structural means (2) and an upper support element (3) intended to come into contact with said element that is to be mounted, the said respective upper (3) and lower (5) supports respectively comprising upper and lower bearing surfaces (36, 56; 37, 57; 38, 58) respectively facing one another in pairs, each pair of surfaces formed of a lower bearing surface facing an upper bearing surface defining a fixing tab (6, 7, 8) for attaching the said support (1) to the said structural means (2) of the vehicle, **characterized in that** the nut (4) is prevented from turning in an appropriate housing of the lower support element (5), the said housing being defined by a bottom surface (50) and rejecting lateral surfaces (51, 52, 53, 54), one (54) of the said projecting lateral surfaces being smaller in size so as to allow the nut (4) to be inserted in the said housing.

2. Screwing support (1) according to Claim 1, **characterized in that** each of the said support element (3, 5) is obtained by cutting and bending a metal sheet.

3. Screwing support (1) according to any one of Claims 1 and 2, **characterized in that** the said bottom surface (50) lies substantially above the said fixing tabs (6, 7, 8).

4. Screwing support (1) according to any one of Claims 1 to 3, **characterized in that** the said fixing tabs comprise at least one fixing tab (6, 7) running parallel to the said bottom surface (50).

5. Screwing support (1) according to any one of Claims 1 to 4, **characterized in that** the said fixing tabs comprise at least one tab (8) running obliquely with respect to the said bottom surface (50).

6. Screwing support (1) according to any one of Claims 1 to 5, **characterized in that** the said support elements (3, 5) comprise opposing oblong orifices (35, 55) for the passage of the screw and of a tool allowing the said support elements (3, 5) to be positioned on the structural means (2) of the vehicle.

7. Screwing support (1) according to any one of Claims 1 to 6, **characterized in that** the said upper support element (3) comprises a bearing surface to come directly into contact with the said element that is to be mounted, the said bearing surface lying substantially above the said fixing tabs (6, 7, 8) and extending above the said structural means by a predetermined height.

8. Method of assembling the screwing support (1) of a motor vehicle element able to allow this element to be mounted on the structural means (2) of the vehicle, the said support (1) forming the cage in which there is mounted a nut (4) able to collaborate with a bolt for mounting the element, the said support comprising a lower support element (5) intended to come into contact with the said structural means (2) and an upper support element (3) intended to come into contact with the said element that is to be mounted, the said respective upper (3) and lower (5) supports respectively comprising upper and lower bearing surfaces (36, 56; 37, 57; 38, 58) facing one another in pairs, each pair of surfaces formed of a lower bearing surface and facing upper bearing surface defining a fixing tab (6, 7, 8) for attaching the said support (1) to the said structural means (2) of the vehicle, **characterized in that** it consists, during the fitting-out operations, in positioning the two support elements on the structural means (2) of the vehicle then in welding each pair of bearing surfaces together and to the structural means of the vehicle using a single spot weld (9), and then, during a subsequent phase, mounting the nut in the cage thus formed.

## Patentansprüche

1. Schraubhalterung (1) eines Kraftfahrzeugelements wie eines Sitzes, die geeignet ist, die Montage dieses Elements an einem strukturellen Mittel (2) des Fahrzeugs zu gestatten, wobei die Halterung (1) einen Käfig bildet, in dem eine Mutter (4) montiert ist, die mit einer Schraube zur Montage des Elements zusammenwirken kann, und ein unteres Halterungselement (5), das dazu bestimmt ist, mit dem strukturellen Mittel (2) in Kontakt zu kommen, und ein oberes Halterungselement (3) umfasst, das dazu bestimmt ist, mit dem zu montierenden Element in Kontakt zu kommen, wobei die obere Halterung (3) bzw. die untere Halterung (5) jeweils sich paarweise gegenüberliegende obere und untere Stützflächen (36, 56; 37, 57; 38, 58) umfassen, wobei jedes Flächenpaar aus einer unteren und einer oberen Stützfläche gebildet ist, die sich gegenüberliegen und einen Befestigungsansatz (6, 7, 8) der Halterung (1) an dem strukturellen Mittel (2) des Fahrzeugs definieren, **dadurch gekennzeichnet, dass** die Mutter (4) in einer geeigneten Aufnahme des unteren Halterungselements (5) gegen Verdrehen gesichert ist, wobei die Aufnahme durch eine Bodenfläche (50) und durch vorstehende Seitenflächen (51, 52, 53, 54) definiert wird, wobei eine (54) der vorstehenden Seitenflächen eine verringerte Abmessung hat, damit die Mutter (4) in die Aufnahme eingeführt werden kann.

2. Schraubhalterung (1) nach Anspruch 1, **dadurch gekennzeichnet, dass** jedes der Halterungselemente (3, 5) durch Biegen und Schneiden einer Metallplatte erhalten wird.

3. Schraubhalterung (1) nach Anspruch 1 oder 2, **dadurch gekennzeichnet, dass** sich die Bodenfläche (50) im Wesentlichen über den Befestigungsansätzen (6, 7, 8) befindet.

4. Schraubhalterung (1) nach einem der Ansprüche 1 bis 3, **dadurch gekennzeichnet, dass** die Befestigungsansätze mindestens einen Befestigungsansatz (6, 7) umfassen, der sich parallel zur Bodenfläche (50) erstreckt.

5. Schraubhalterung (1) nach einem der Ansprüche 1 bis 4, **dadurch gekennzeichnet, dass** die Befestigungsansätze mindestens einen Ansatz (8) umfassen, der sich schräg zur Bodenfläche (50) erstreckt.

6. Schraubhalterung (1) nach einem der Ansprüche 1 bis 5, **dadurch gekennzeichnet, dass** die Halterungselemente (3, 5) gegenüberliegende längliche Öffnungen (35, 55) umfassen, durch die die Schraube und ein Werkzeug gehen können, um die Positionierung der Halterungselemente (3, 5) am strukturellen Mittel (2) des Fahrzeugs zu gestatten.

7. Schraubhalterung (1) nach einem der Ansprüche 1 bis 6, **dadurch gekennzeichnet, dass** das obere Halterungselement (3) eine Stützfläche umfasst, die direkt mit dem zu montierenden Element in Kontakt kommen soll, wobei sich die Stützfläche im Wesentlichen über den Befestigungsansätzen (6, 7, 8) befindet und sich auf einer vorbestimmten Höhe über dem strukturellen Mittel erstreckt.

8. Verfahren zum Zusammenbau einer Schraubhalterung (1) eines Kraftfahrzeugelements, die dazu geeignet ist, die Montage dieses Elements an einem strukturellen Mittel (2) des Fahrzeugs zu gestatten, wobei die Halterung (1) einen Käfig bildet, in dem eine Mutter (4) montiert ist, die zur Montage des Elements mit einer Schraube zusammenwirken kann, wobei die Halterung ein unteres Halterungselement (5), das mit dem strukturellen Mittel (2) in Kontakt kommen soll, und ein oberes Halterungselement (3) umfasst, das mit dem zu montierenden Element in Kontakt kommen soll, wobei das obere (3) bzw. untere (5) Halterungselement jeweils obere und untere Stützflächen (36, 56; 37, 57; 38, 58) umfassen, die sich paarweise gegenüberliegen, wobei jedes Paar Flächen aus einer unteren und einer oberen Stützfläche gebildet ist, die sich gegenüberliegen und einen Befestigungsansatz (6, 7, 8) der Halterung (1) am strukturellen Mittel (2) des Fahrzeugs definieren, **dadurch gekennzeichnet, dass** bei den Montagevorgängen die beiden Halterungselemente am strukturellen Mittel (2) des Fahrzeugs positioniert werden, wonach jedes Paar Stützflächen mittels einer einzigen Schweißstelle (9) aufeinander und auf das strukturelle Mittel des Fahrzeugs geschweißt wird, wonach bei einer späteren Phase die Mutter in dem so gebildeten Käfig montiert wird.
